# EUROPEAN PATENT APPLICATION

(11) **EP 3 403 707 A1**
(43) Date of publication of application: **21.11.2018**
(21) Application number: 17753335.3
(22) Date of filing: 17.02.2017
(51) Int. Cl.: B01D 21/06, B01D 21/00, B01D 21/01, B01D 21/30, C22B 3/22, C22B 23/00

(54) **THICKENER FOR OBTAINING HIGH CONCENTRATION SLURRY AND CONTROL METHOD FOR SAME**

(30) Priority: 18.02.2016 JP 2016029307; 09.03.2016 JP 2016045540
(71) Applicant: Sumitomo Metal Mining Co., Ltd., Tokyo 105-8716 (JP)
(72) Inventor: NAGAI Takaaki, Tokyo 105-8716 (JP); TANAKA Masahiro, Tokyo 105-8716 (JP); OISHI Takao, Tokyo 105-8716 (JP); KITAZAKI Tooru, Tokyo 105-8716 (JP)
(74) Representative: Schmit, Christian Marcel Jean
(86) International application number: PCT/JP2017/005988
(87) International publication number: WO 2017/142081

(57) **Abstract**

Provided are a thickener and a method for controlling the thickener which can obtain, in a step which includes a thickener, such as solid-liquid separation step, concentrated slurry having high slurry concentration from a bottom of the thickener.

In the thickener and the method for controlling the thickener used for concentrating slurry in hydrometallurgy of nickel oxide ore, the thickener being used in solid-liquid separation equipment provided with more than one thickener so as to increase a concentration of slurry to be obtained,
the thickener includes: a rake which is mounted in a movable manner in an upward and downward direction of the thickener, and in a rotatable manner using a center shaft provided in the thickener, as a rotary shaft; and a proximity switch which adjusts a lower limit position for the rake during operation, and
the proximity switch is set such that the lower limit position for the rake during the operation is set at a position separated upward in a vertical direction by a distance of 25 to 35 cm from a structural lowermost limit position for the rake thus increasing a concentration of slurry to be obtained at a position below the rake.

## Description

### Technical Field

The present invention relates to a thickener and a method for controlling the thickener which increases a slurry concentration of concentrated slurry obtained from a bottom of the thickener.

### Background Art

Recently, a high pressure acid leach has been drawing attention as a hydrometallurgical process for recovering valuable metals from nickel oxide ore. This method does not include a dry treatment step such as drying or roasting, thus having an advantage in terms of reducing energy costs.

In general, a sulfuric acid solution containing nickel and cobalt leached from nickel oxide ore using the high pressure acid leach is recovered as a mixed sulfide where the grades of nickel and cobalt are increased by adding a sulfurizing agent such as a hydrogen sulfide gas to the sulfuric acid solution.

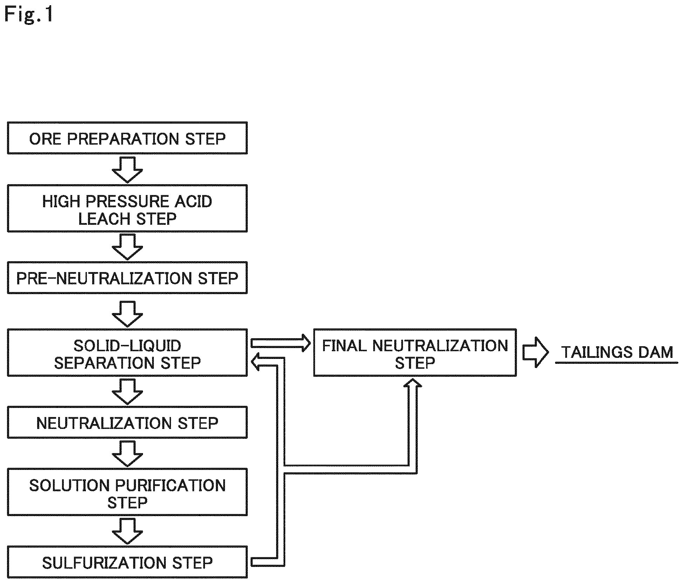

Specifically, the hydrometallurgical process using the high pressure acid leach for obtaining nickel-cobalt mixed sulfide includes: (1) a step of obtaining ore slurry containing nickel oxide ore sieved to several mm or less; (2) a step of obtaining leached slurry by high temperature pressure leaching the ore slurry; (3) a step where the obtained leached slurry is subjected to solid-liquid separation thus obtaining residue slurry containing concentrated leach residue and a crude nickel sulfate solution containing zinc as an impurity besides nickel and cobalt; (4) a step where the obtained crude nickel sulfate solution is supplied to a slightly pressurized reaction tank, and a sulfurizing agent such as a hydrogen sulfide gas is added to the obtained crude nickel sulfate solution thus sulfurizing zinc contained in the crude nickel sulfate solution and, thereafter, solid-liquid separation is performed thus obtaining a zinc sulfide and a dezincification final solution; and (5) a step where the obtained dezincification final solution is supplied to a pressurized reaction tank, and a sulfurizing agent such as a hydrogen sulfide gas is added to the obtained dezincification final solution thus sulfurizing nickel and cobalt contained in the dezincification final solution and, thereafter, solid-liquid separation is performed thus obtaining a nickel-cobalt mixed sulfide and a process waste liquid. Figure 1 shows a producing process flow for obtaining nickel-cobalt mixed sulfide.

It is known that, in the solid-liquid separation step which is step (3) in the hydrometallurgical process, the leached slurry obtained in step (2) is separated into residue slurry containing concentrated leach residue and a crude nickel sulfate solution by a thickener and, at the same time, the residue slurry containing concentrated leach residue is subjected to multi-stage washing treatment.

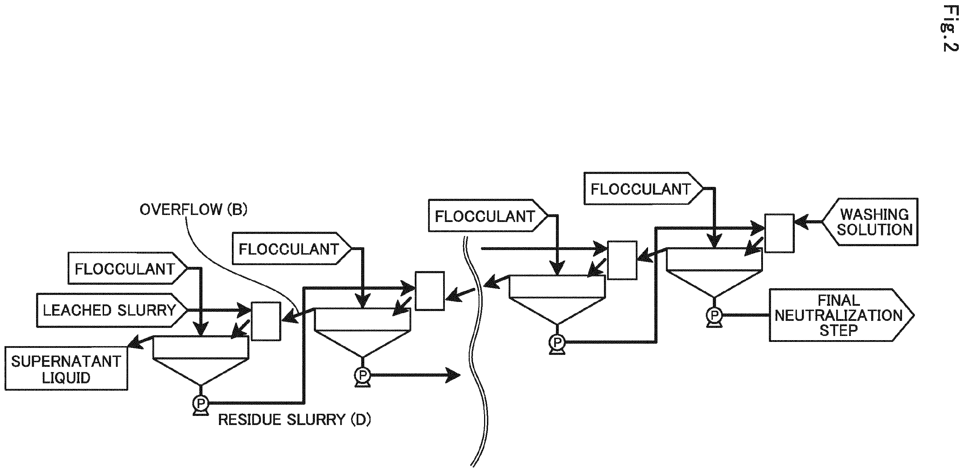

For a specific method for performing multi-stage washing, the Counter Current Decantation (CCD method) is adopted where thickeners as shown in Figure 2 are connected in a plurality of stages, and residue slurry containing concentrated leach residue is made to be countercurrently brought into contact with a washing solution containing a negligible amount of nickel and cobalt thus washing away adhesion water adhering to the leach residue and containing nickel and cobalt. With the use of such a method, the recovery ratio of nickel and cobalt, which are valuable metals, is enhanced.

Assume that, in the multi-stage washing treatment shown in Figure 2, a thickener (: on the leftmost end side in Figure 2) to which leached slurry is supplied is a thickener of the initial stage (first stage), and a thickener (: on the rightmost end side in Figure 2) to which a washing solution containing a negligible amount of nickel and cobalt is supplied is a thickener of the final stage (seventh stage). The residue slurry containing concentrated leach residue is discharged from the thickener of the final stage after the multi-stage washing, and the residue slurry is fed to waste water treatment step. Accordingly, nickel and cobalt, which are contained in the residue slurry containing concentrated leach residue and are valuable metals, are not recovered as products so that the loss of nickel and cobalt is generated.

In Figure 2, a flocculant, residue slurry from a thickener of the (n-1)-th stage, and an overflow from a thickener of the (n+1)-th stage are supplied to a thickener of the n-th stage as raw materials. In this regard, leached slurry is supplied to the thickener of the initial stage instead of the residue slurry, and a washing solution is supplied to the thickener of the final stage instead of the overflow. These raw materials are preferably supplied to the thickener after performing premixing in a feed well or an agitation tank.

Method have been known where the loss of nickel and cobalt, which are valuable metals, is reduced as much as possible in the multi-stage washing treatment thus enhancing a recovery ratio. That is, (a) an amount of a washing solution is increased, (b) a content of nickel and cobalt in the washing solution is lowered, and (c) a slurry concentration of residue slurry containing concentrated leach residue which is obtained from a bottom of the thickener of each stage is increased.

In the multi-stage washing treatment by the Counter Current Decantation, the concentration of nickel and cobalt, which are valuable metals, in the respective thickeners are lowered stage by stage toward the thickener of the final stage. Accordingly, by performing the above-mentioned method (c), it is possible to reduce conveying of a solution having high concentration of nickel and cobalt in the preceding stage thickener to the following stage thickener.

Finally, the residue slurry containing concentrated leach residue is discharged from the thickener of the final stage, and a concentration of nickel and cobalt in the residue slurry can be lowered. Accordingly, the loss of nickel and cobalt, which are valuable metals, can be reduced.

In view of the above, there has been a demand for a thickener and a method for controlling the thickener which can enhance a slurry concentration of residue slurry obtained from a bottom of the thickener.

A thickener used in the multi-stage washing treatment generally includes: a body formed of a cylindrical outer frame and a conical bottom; a rake installed on a center shaft of the thickener body, and is formed of a plurality of blades mounted on a lower portion of a rotary shaft in a radial manner; a drive device causing the rake to rotate, ascend and descend; and a feed well to which an additive such as a suspension or flocculant is supplied.

With respect to a method for controlling a thickener having such a configuration, for example, Patent Literature 1 discloses a technique that a flocculant is added to a feed well or an overflow portion of the thickener thus increasing transparency of a supernatant liquid to be obtained. Further, Patent Literature 2 discloses a technique that a feed well including a specific straightening plate is adopted thus eliminating drift of a sedimentation concentration portion in the thickener.

However, neither of Patent Literature 1 nor Patent Literature 2 discloses a thickener and a method for controlling the thickener which increase a slurry concentration of concentrated slurry obtained from a bottom of the thickener.

### Citation List

### Patent Literature

Patent Literature 1: Japanese Patent No. 5692458
Patent Literature 2: Japanese Patent Laid-Open No. 2010-201324

### Summary of Invention

### Technical Problem

The present invention has been made to overcome such a situation, and it is an object of the present invention to provide a thickener and a method for controlling the thickener which can obtain, in a step which includes a thickener, concentrated slurry having high slurry concentration from a bottom of the thickener.

### Solution to Problem

Inventors of the present invention found a method for controlling a thickener where, in a multi-stage washing treatment where thickeners are connected in a plurality of stages, a position of a rake is shifted upward by a proximity switch, which adjusts a lower limit position for a rake during the operation in each thickener, so that a position of a precipitation solid layer in the thickener is maintained at a high level and hence, a pressure is generated in the direction toward a bottom of the thickener due to own weight of the precipitation solid layer whereby concentrated slurry having a high slurry concentration can be collected at a bottom of the thickener. Accordingly, the inventors of the present invention reached the completion of the present invention.

That is, the first aspect of the present invention is a method for controlling a thickener used for concentrating slurry in hydrometallurgy of nickel oxide ore, the thickener being used in solid-liquid separation equipment provided with more than one thickener so as to increase a concentration of slurry to be obtained, wherein
the thickener includes: a rake which is mounted in a movable manner in an upward and downward direction of the thickener, and in a rotatable manner using a center shaft provided in the thickener, as a rotary shaft; and a proximity switch which adjusts a lower limit position for the rake during operation, and
the proximity switch is set such that the lower limit position for the rake during the operation is set at a position separated upward in a vertical direction by a distance of 25 to 35 cm from a structural lowermost limit position for the rake thus increasing a concentration of concentrated slurry to be obtained at a position below the rake.

The second aspect of the present invention is a thickener which is used for concentrating slurry in hydrometallurgy of nickel oxide ore, the thickener being used in solid-liquid separation equipment provided with more than one thickener so as to increase a concentration of slurry to be obtained, the thickener including:
a rake which is mounted in the thickener in a movable manner in an upward and downward direction, and in a rotatable manner using a center shaft provided in the thickener, as a rotary shaft; and
a proximity switch which adjusts a lower limit position for the rake during operation.

The third aspect of the present invention is a thickener characterized in that the proximity switch of the second aspect is mounted on the thickener in a movable manner in the upward and downward direction of the thickener.

The fourth aspect of the present invention is a thickener characterized in that the proximity switch of the second or third aspect is mounted on the thickener such that the lower limit position for the rake during the operation is settable at a position separated upward in a vertical direction by a distance of 25 to 35 cm from a structural lowermost limit position for the rake.

### Advantageous Effects of Invention

According to the present invention, in the step which includes the thickener, a slurry concentration of concentrated slurry obtained from the bottom of the thickener can be increased and hence, the loss of nickel and cobalt, which are valuable metals, can be reduced. Therefore, the present invention has an extremely high industrial value.

### Brief Description of Drawings

[Figure 1] This figure is a process diagram of a hydrometallurgical process using the high pressure acid leach of nickel oxide ore.
[Figure 2] This figure is a view showing the flow of a solid-liquid separation step which uses a multi-stage washing treatment.
[Figure 3] This figure is a view showing one example of a structure of a thickener in which Figure 3(a) is a schematic view showing an entire structure of the thickener, and Figure 3(b) is an enlarged schematic view showing a structure of a rake 5 and a lower limit position for a rake according to the present invention.

### Description of Embodiments

Hereinafter, the description is made in detail with respect to a method for controlling a thickener which increases a concentration of slurry obtained from a bottom of the thickener and a thickener used in the method according to the present invention. The present invention is not limited to the following embodiment, and suitable modifications are conceivable without departing from the gist of the present invention.

The present invention is characterized by a method for controlling a thickener where a set position in the thickener for a proximity switch, which adjusts a lowermost limit position for a rake, is set such that a lower limit position for the rake during the operation is set higher than a structural lowermost limit position for the rake so that a position of a precipitation solid layer in the thickener is maintained at a high level whereby a pressure is applied to a bottom of the thickener due to its own weight thus obtaining concentrated slurry having a high slurry concentration.

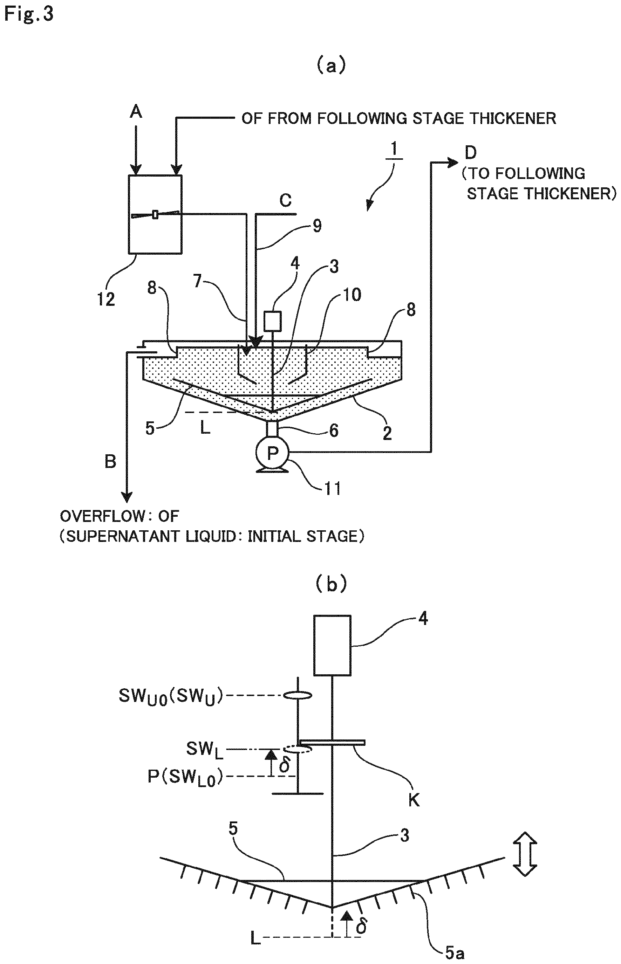

In this regard, although the thickener according to the present invention is not particularly limited, for example, a thickener 1 shown in Figure 3 is used. Figure 3(a) is a schematic view showing the entire structure of the thickener, and Figure 3(b) is a view showing the rake structure showing the lower limit set position for a rake 5. During the operation of the thickener, the rake 5 is operated in a state where a proximity switch SW_{L} is set. The proximity switch SW_{L} indicates a position separated upward by δ from "structural lowermost limit position L" from which the rake 5 cannot move downward, that is, "lower limit set position" for the rake 5 during the operation.

In an upper portion of a thickener body 2, a center shaft 3 including a rotary shaft (not shown) in a rotatable manner is provided and the rake 5 which includes teeth 5a at various parts of each arm extending in a radial manner (as viewed from above) is mounted on the center shaft 3 at the bottom side of the thickener body 2 such that the rake 5 is rotatable about and movable in the upward and downward direction (outline arrow) along the center shaft 3. A drive part 4 which causes the rotary shaft of the center shaft 3 to rotate so as to move the rake 5 in the upward and downward direction, is mounted on the upper end side of the center shaft 3. A contact K which descends and ascends together with a descending movement and an ascending movement of the rake 5, is mounted on an upper portion of the center shaft 3. Further, the proximity switch (SW_{L}) which sets the lower limit position for the rake 5, and a proximity switch (SW_{U0}) which sets the upper limit position for the rake 5 are fixed and installed at predetermined positions such that these switches do not move together with the movement of the rake 5. The proximity switch (SW_{L}) and the proximity switch (SW_{U0}) establish the positional relationship where the switch approaches or separates from the contact K with the descending or the ascending of the rake 5. During a period where the contact (K) is detected by the proximity switch (SW_{L}), the rotation of the rake 5 is maintained but the descending of the rake 5 is prohibited. A contact type switch may be used as the proximity switch. Also may be used a non-contact type switch which takes, in a state where the switch is close to the contact, for example, a detection of a change in any one of an electric field, a magnetic field or an electrostatic capacity, as a detection of the contact.

The contact or the proximity switches is installed in a movable manner in the upward and downward direction. In the present invention, as shown in Figure 3 (b), the proximity switch SW_{L} is installed such that the descending of the rake 5 stops at a position where the rake 5 is moved upward by δ cm from the structural lowermost limit position L. Positions where the contact and the proximity switch are installed are not particularly limited to the center shaft portion as indicated by Figure 3, and the contact and the proximity switch may be installed at appropriate portions and may be installed such that the position of the contact and the position of the proximity switch are exchanged. When one of the contact or the proximity switch is installed on the bottom of the thickener, the other of the contact or the proximity switch can be installed on a lower portion of the rake 5. Alternatively, when one of the contact or the proximity switch is installed on the drive part 4, a canopy of the thickener or the like, the other of the contact or the proximity switch can be installed at a position higher than the rake 5. In this way, when the contact is installed at a position higher than the rake 5, the proximity switch SW_{L} can be exposed from a liquid surface. Accordingly, the adhesion of slurry to the proximity switch SW_{L} is prevented so that accuracy of the proximity switch SW_{L} is enhanced. Further, the adhesion of an acid solution to the proximity switch SW_{L} is prevented so that durability of the proximity switch SW_{L} is enhanced. Therefore, such a configuration is desirable in terms of ease of maintenance.

In Figure 3(a), reference numeral 6 denotes a residue slurry outlet, reference numeral 7 denotes a raw material supply port, reference numeral 8 denotes an overflow weir, reference numeral 9 denotes a flocculant supply port, reference numeral 10 denotes a feed well, reference numeral 11 denotes a pump, reference numeral 12 denotes an agitation tank, reference sign K denotes the contact, reference sign A denotes a raw material, reference sign B denotes an overflow, reference sign C denotes an additive such as a flocculant, reference sign D denotes residue slurry, reference sign L denotes a structural lowermost limit position for the rake 5, reference sign P denotes a lowermost limit position for the proximity switch (SW_{L}) within a range where the proximity switch (SW_{L}) can be set, and the lowermost limit position for the proximity switch (SW_{L}) corresponds to the structural lowermost limit position L for the rake, and reference sign δ denotes a distance from the structural lowermost limit position L for the rake to a lower limit position for the rake during the operation, that is, the distance δ is a set distance for the proximity switch.

To be more specific, in a hydrometallurgical process for recovering valuable metal from nickel oxide ore, the thickener and the method for controlling the thickener according to the present invention can be used for respective thickeners used in a multi-stage washing treatment where thickeners are connected in a plurality of stages.

By applying the thickener and the method for controlling the thickener to the respective thickeners in the multi-stage washing treatment, residue slurry having high slurry concentration can be obtained and hence, the loss of nickel and cobalt, which are valuable metals, can be reduced.

The more detailed description is made by taking examples where the method for controlling the thickener is used for the respective thickeners in the multi-stage washing treatment as specific examples.

First, prior to the more specific description of the respective thickeners in the multi-stage washing treatment, a method for adjusting a thickener is described.

Figure 3 shows one example of the thickener. A slurry concentration in the thickener gradually increases in the direction toward the bottom of the thickener in the vertical direction. Accordingly, the rake provided to each thickener rotates a slurry layer having a high slurry concentration in the thickener so that fixing of the slurry is prevented. At the same time, the rake applies a pressure to the slurry layer thus further increasing a slurry concentration at the bottom of the thickener. On the other hand, a torque is applied to the rake from the slurry layer. That is, when the rake rotates a slurry layer having a high slurry concentration, a large torque is applied to the rake. On the other hand, when the rake rotates a slurry layer having a low slurry concentration, a small torque is applied to the rake.

Accordingly, from a view point of protecting the equipment, the rake is configured to ascend when a torque equal to or more than a certain value is applied to the rake so as to prevent an excessively large torque from being applied to the rake. Conversely, the rake is configured to descend when a torque becomes equal to or less than a certain value so as to apply a sufficient pressure to a slurry layer.

A lowermost limit position and an uppermost limit position of ascending and descending of the rake are determined by the proximity switches installed respectively. Set positions for the proximity switches are variable in the height direction of the thickener body.

In this embodiment, the position of the precipitation solid layer in the thickener is adjusted by adjusting a rate of a slurry discharge flow from the bottom of the thickener. When the position of the precipitation solid layer becomes excessively high, transparency of a supernatant liquid lowers. On the other hand, when the position of the precipitation solid layer becomes excessively low, own weight lowers so that a slurry concentration of slurry obtained from the bottom of the thickener lowers.

That is, it is important to maintain the position of the precipitation solid layer in the thickener constant.

However, it is difficult to continuously monitor the position of the precipitation solid layer. Therefore, a management method is adopted where a rate of a slurry discharge flow from the bottom of the thickener is adjusted such that the position of the rake is at the lowermost limit position and a torque is constant.

Next, an adjustment method in the present invention is described in detail.

On the premise that the above-mentioned method for controlling a thickener is adopted, in the present invention, an installation position for the proximity switch (see reference sign SW_{L} in Figure 3(b)), which adjusts the lower limit position for the rake during operation, is moved upward by δ cm (see reference sign SW_{L} in Figure 3(b)) from the structural lowermost limit position L for the rake (corresponding to the lowermost limit position P within a range where the proximity switch can be set). The movement distance δ of the installation position for the proximity switch is not particularly limited. However, it is preferable that the structural lowermost limit position for the rake in the thickener be used as a reference and the installation position for the proximity switch be moved upward from the reference by 21 to 50 cm, particularly by 21 to 29 cm or 25 to 35 cm.

With such a configuration, when the rake is positioned at the lower limit during the operation (a position determined by the proximity switch) in the thickener, the position is disposed at a position higher than a corresponding position in the conventional art by δ. Thus, (in adjusting a rate of a slurry discharge flow such that a torque becomes constant), the position of a precipitation solid layer becomes higher than the corresponding position of a precipitation solid layer in the conventional art. Therefore, due to its own weight, it is possible to obtain slurry having a higher slurry concentration compared to the conventional art.

That is, in the respective thickeners in the multi-stage washing step, it is possible to reduce a conveying amount of a solution having high concentration of nickel and cobalt, which are valuable metals, in the preceding stage thickener to the following stage thickener compared to the conventional art. Accordingly, a concentration of nickel and cobalt, which are valuable metals, in slurry discharged from the bottom of the final stage thickener can be lowered and hence, the loss can be reduced compared to the conventional art.

Particularly, leached slurry discharged in a high temperature pressure leaching step contains an Al oxide and a Si oxide so that precipitation is difficult to settle down. Therefore, to obtain concentrated residue slurry having a high slurry concentration, it is preferable to perform a slight adjustment. To be more specific, it is preferable that, using the structural lowermost limit position for the rake as the reference, the rake be moved upward to a position higher than the reference by 21 to 50 cm, particularly 21 to 29 cm or 25 to 35 cm.

When the movement distance is less than 25 cm, the position of the precipitation solid layer in the thickener is low so that a slurry concentration of residue slurry does not increase significantly. On the other hand, when the movement distance of the set position for the proximity switch, which adjusts the lower limit position for the rake during the operation, exceeds 35 cm, the position of the precipitation solid layer in the thickener becomes high so that transparency of a supernatant liquid of the thickener lowers.

### [Example]

Hereinafter, the present invention is described in more detail with reference to examples of the present invention. However, the present invention is not in any way limited by these examples.

In the examples, ICP emission spectrometry was employed as a method for analyzing metal. The slurry concentration was evaluated by a weight per unit volume.

### [Example 1]

In a solid-liquid separation step in the hydrometallurgical process using the high pressure acid leach of nickel oxide ore, solid-liquid separation treatment was performed where leached slurry obtained in a leaching step is subjected to multi-stage washing, where thickeners are connected in a plurality of stages, thus obtaining residue slurry containing concentrated leach residue and a crude nickel sulfate solution. Conditions in the solid-liquid separation treatment are shown in following Table 1.

**[Table 1]**

| | |
|---|---|
| Ratio of solid content in leached slurry: | 35 to 40 weight% |
| pH of leached slurry: | 2.9 to 3.1 |
| Flow rate of leached slurry: | 200 to 300 m³/h |
| Nickel concentration in washing solution: | 40 to 60 mg/L |
| Flow rate of washing solution: | 250 to 450 m³/h |
| The number of stages of thickener: | seven stages |

In the solid-liquid separation treatment performed, the following method was adopted as a method for controlling respective thickeners. A rate of a slurry discharge flow from a bottom of the thickener is adjusted such that the position of a rake is at a lowermost limit, and a torque is constant.

In Example 1, in a fourth stage thickener, a set position for a proximity switch SW_{L}, which adjusts a lower limit position for the rake during the operation, was disposed at a portion in the thickener moved upward by 29 cm (=δ) from a structural lowermost limit position L for the rake. That is, during the operation, the descending of the rake is stopped at a position higher than the structural lowermost limit position for the rake by 29 cm, and the rotation is continued at the position so that a slurry concentration is increased.

### [Example 2]

In Example 2, a solid-liquid separation treatment was performed in substantially the same manner as Example 1 except that, in a fifth stage thickener instead of the fourth stage thickener, a set position for a proximity switch SW_{L}, which adjusts a lower limit position for a rake during the operation, was adjusted to a portion in the thickener which is moved upward by 29 cm from a structural lowermost limit position for the rake.

### [Example 3]

In Example 3, a solid-liquid separation treatment was performed in substantially the same manner as Example 1 except that, in a sixth stage thickener instead of the fourth stage thickener, a set position for a proximity switch SW_{L}, which adjusts a lower limit position for a rake during the operation, was adjusted to a portion in the thickener which is moved upward by 29 cm from a structural lowermost limit position for the rake.

### (Reference example 1)

In Reference example 1, a solid-liquid separation treatment was performed in substantially the same manner as Example 1 except that, in a fourth stage thickener, a set position for a proximity switch SW_{L}, which adjusts a lower limit position for a rake during the operation, was adjusted to a portion in the thickener which is moved upward by 22 cm from a structural lowermost limit position for the rake.

### (Reference example 2)

In Reference example 2, a solid-liquid separation treatment was performed in substantially the same manner as Example 1 except that, in a fifth stage thickener instead of the fourth stage thickener, a set position for a proximity switch SW_{L}, which adjusts a lower limit position for a rake during the operation, was adjusted to a portion in the thickener which is moved upward by 21 cm from a structural lowermost limit position for the rake.

### (Reference example 3)

In Reference example 3, a solid-liquid separation treatment was performed in substantially the same manner as Example 1 except that, in a sixth stage thickener instead of the fourth stage thickener, a set position for a proximity switch SW_{L}, which adjusts a lower limit position for a rake during the operation, was adjusted to a portion in the thickener which is moved upward by 21 cm from a structural lowermost limit position for the rake.

The results of the solid-liquid separation treatment in the respective Examples and Reference examples are collectively shown in Table 2 below.

In Table 2, "density" means an average value of weight per unit volume of concentrated residue slurry obtained from a bottom of each thickener (the fourth stage thickener in Example 1 and Reference example 1, the fifth stage thickener in Example 2 and Reference example 2, and the sixth stage thickener in Example 3 and Reference example 3). The concentrated residue slurry was sampled every 8 hours in a state where a stable operation was performed during a certain period of time.

**[Table 2]**

| | Thickener where adjustment was performed | Set distance δ [cm] for proximity switch from lowermost limit position | Density [g/ml] of residue slurry obtained from bottom of thickener |
|---|---|---|---|
| Example 1 | Fourth stage thickener | 29 | 1.48 |
| Example 2 | Fifth stage thickener | 29 | 1.50 |
| Example 3 | Sixth stage thickener | 29 | 1.52 |
| Reference example 1 | Fourth stage thickener | 22 | 1.46 |
| Reference example 2 | Fifth stage thickener | 21 | 1.47 |
| Reference example 3 | Sixth stage thickener | 21 | 1.47 |

As is clearly seen from Table 2, it can be understood that, in Examples 1 to 3, concentrated residue slurry having higher weight per unit volume than concentrated residue slurry in Reference examples 1 to 3 was obtained from the bottom of each thickener. That is, this means that mixing of a liquid phase portion into residue slurry was reduced thus reducing the loss of nickel caused by mixing of the liquid phase portion.

Table 3 shows concentration of nickel in concentrated residue slurry obtained from a bottom of the thickener of the seventh stage, which is the final stage, during a period where Examples 1 to 3 were performed and a period where Reference examples 1 to 3 were performed.

Concentration of nickel in the concentrated residue slurry obtained from the bottom of the thickener of the seventh stage, which is the final stage, is affected by an amount of washing solution and a concentration of nickel in the washing solution as described above. Accordingly, Table 3 shows average values of samples only in a state where the above-mentioned parameters are substantially the same.

**[Table 3]**

| | Ni concentration [g/L] in residue slurry obtained from bottom of thickener of seventh stage |
|---|---|
| Examples 1 to 3 | 0.110 |
| Reference examples 1 to 3 | 0.123 |

As shown in Table 3, in Examples 1 to 3, a weight per unit volume of concentrated residue slurry obtained from the bottom of the thickener increased. Accordingly, in the respective thickeners, conveying of a solution having high concentration of nickel to the following stage thickener was reduced. For this reason, compared to Reference examples 1 to 3, a concentration of nickel in the residue slurry obtained from the bottom of the thickener of the seventh stage was lowered, and it can be seen that the loss of nickel was reduced.

### (Reference example 4)

In Reference example 4, a solid-liquid separation treatment was performed in substantially the same manner as Example 1 except that, in the fourth stage thickener, a set position for a proximity switch SW_{L}, which adjusts a lower limit position for the rake during the operation, was adjusted to a portion in the thickener which is moved upward by 50 cm from a structural lowermost limit position L for the rake. As a result, a density of residue slurry was higher than a density of residue slurry in Example 1. However, turbidity of a supernatant liquid obtained from the fourth stage thickener was increased compared to Example 1.

### (Comparative example 1)

In Comparative example 1, a solid-liquid separation treatment was performed in substantially the same manner as Example 1 except that a proximity switch was removed from the fourth stage thickener, and a lower limit position for a rake during the operation was set at a level equal to a structural lowermost limit position L for the rake of the thickener. As a result, a density of residue slurry obtained from the fourth stage thickener was always below 1.40 g/mL.

### Reference Signs List

A residue slurry (or leached slurry)
B overflow: OF (solution containing Ni, Co)
C additive such as flocculant
D residue slurry
L structural lowermost limit position for rake
P(SW_{L0}) lowermost limit position for proximity switch within a range where proximity switch can be set
SW_{L} proximity switch
SW_{U0}(SW_{U}) uppermost limit position for proximity switch within a range where proximity switch can be set
K contact
1 thickener
2 thickener body
3 center shaft
4 drive part
5 rake
5a tooth
6 residue slurry outlet
7 raw material supply port
8 overflow weir
9 supply port for additive (such as flocculant)
10 feed well
11 pump
12 agitation tank
δ distance from structural lowermost limit position L for rake to lower limit position for rake during operation, set distance for proximity switch.

## Claims

1. A method for controlling a thickener used for concentrating slurry in hydrometallurgy of nickel oxide ore, the thickener being used in solid-liquid separation equipment provided with more than one thickener so as to increase a concentration of slurry to be obtained, wherein
the thickener includes: a rake which is mounted in a movable manner in an upward and downward direction of the thickener, and in a rotatable manner using a center shaft provided in the thickener, as a rotary shaft; and a proximity switch which adjusts a lower limit position for the rake during operation, and
the proximity switch is set such that the lower limit position for the rake during the operation is set at a position separated upward in a vertical direction by a distance of 25 to 35 cm from a structural lowermost limit position for the rake thus increasing a concentration of slurry to be obtained at a position below the rake.

2. A thickener used for concentrating slurry in hydrometallurgy of nickel oxide ore, the thickener being used in solid-liquid separation equipment provided with more than one thickener so as to increase a concentration of slurry to be obtained, the thickener comprising:
a rake which is mounted in the thickener in a movable manner in an upward and downward direction, and in a rotatable manner using a center shaft provided in the thickener, as a rotary shaft; and
a proximity switch which adjusts a lower limit position for the rake during operation, wherein
the proximity switch is mounted on the thickener such that the lower limit position for the rake during the operation is settable at a position separated upward in a vertical direction by a distance of 25 to 35 cm from a structural lowermost limit position for the rake.

3. The thickener according to claim 2, wherein the proximity switch is mounted on the thickener in a movable manner in the upward and downward direction of the thickener.
